# EUROPEAN PATENT SPECIFICATION

(11) **EP 4 262 418 B1**
(45) Date of publication and mention of the grant of the patent: **17.09.2025**
(21) Application number: 21793861.2
(22) Date of filing: 04.10.2021
(51) Int. Cl.: A23F 3/14, A23L 33/16

(54) **A ZINC FORTIFIED TEA COMPOSITION**
EINE ZINKANGEREICHERTE TEE-ZUSAMMENSETZUNG
UNE COMPOSITION DE THÉ FORTIFIÉE DE ZINC

(30) Priority: 15.12.2020 IN 202021054640
(43) Date of publication of application: 25.10.2023
(73) Proprietor: Ekaterra Research and Development UK Limited, Sharnbrook, Bedfordshire MK44 1LQ (GB)
(72) Inventor: KUMARAN, Vetri, Whitefield Bangalore 560 066 Karanataka (IN); MHASAVADE, Deepak, Ramachandra, Whitefield Bangalore 560 066 Karanataka (IN); PALAGIRI, Swathy, Whitefield Bangalore 560 066 Karanataka (IN); VELUSAMY, Balamurugan, Whitefield Bangalore 560 066 Karanataka (IN)
(74) Representative: Mewburn Ellis LLP
(86) International application number: PCT/EP2021/077312
(87) International publication number: WO 2022/128193

(56) References cited:
- EP-A1- 1 792 544
- US-A1- 2002 136 802
- US-A1- 2006 228 431
- US-A1- 2011 027 422

## Description

### Field of the Invention

The present invention relates to a tea composition. In particular, the present invention relates to a zinc fortified tea composition.

### Background and Prior Art

Tea is one of the most popular beverages in the world. It is believed that consumption of tea refreshes our mind. Polyphenols that are present in tea are also considered to be good for human health. There are varieties of tea available in the market, e.g. black tea, green tea, oolong tea, white tea, *etc.*

Black tea is generally prepared by a process which includes the steps of withering, macerating, fermenting and firing/drying. On the other hand, green tea manufacturing process does not include the step of fermentation. Therefore, the characteristic profile of green tea is different from that of black tea.

Most of the people in Asian countries drinks tea at least twice a day or even more. Therefore, tea could be one of the ways of delivering nutrients and essentials elements.

In the present days zinc has gained a lot of importance in the food industry. Zinc is believed to have immunity enhancing properties. It is believed that regular consumption of zinc is having long term effect on the immunity of human body.

In the present times because of COVID 19 pandemic, people are very keen to enhance the immunity response of their inner health. Hence Zinc became very popular.

There are zinc supplements available in the market. US2006228431 describes tea leaves with binders and nutritional supplements. EP1792544 describes fortification of food products with zinc nanoparticles.

The present inventors have found that including zinc in a tea format is particularly problematic in terms of delivering substantial amount the zinc at the end cup. Just adding zinc with a leaf tea product does not results in a good amount of zinc delivery at the resulting beverage. Also, the zinc needs to be delivered in each cup with enough amount. More importantly the zinc delivery should be proportional to the amount of zinc added in the tea leaf during processing.

Therefore, a zinc fortified tea composition which delivers high amount of zinc at the end cup beverage remains to be desired.

### Objects of the invention

In view of the foregoing, it is an object of the present invention to provide a zinc fortified tea composition.

It is another object of the present invention to provide a zinc fortified tea composition with substantial amount of zinc being delivered at each cup of beverages.

The present inventors have surprisingly found that including few selected zinc salts in a micronized form along with a particular selection of two polysaccharides provide a zinc fortified tea composition with substantial amount of zinc being delivered at each cup of beverages and thereby satisfying one or more of the above-mentioned objects.

### Summary of the invention

In a first aspect, the present invention provides a tea composition comprising;
a) a micronized zinc compound;
b) a first polysaccharide comprising maltodextrin;
c) a second polysaccharide comprising gum arabic; and,
d) a leaf tea product.
wherein: the particle size of the zinc compound is in the range of 0.1 to 50 micron; the amount of maltodextrin is in the range of 0.5 to 5% by weight of the composition; and the amount of gum arabic is in the range of 0.05 to 6% by weight.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

The present invention provides a tea composition comprising;
a) a micronized zinc compound;
b) a first polysaccharide comprising maltodextrin;
c) a second polysaccharide comprising gum arabic; and,
d) a leaf tea product. wherein the particle size of the zinc compound is in the range of 0.1 to 50 micron; the amount of maltodextrin is in the range of 0.5 to 5% by weight of the composition; and - the amount of gum arabic is in the range of 0.05 to 6% by weight.

The particle size of the micronized zinc compounds is more preferably in the range of 0.1 to 30 micron, further more preferably in the range of 0.1 to 20 micron and most preferably in the range of 0.1 to 10 micron.

The zinc compounds may be procured in higher size followed by a process of size reduction to obtain a micronized zinc compound of desirable size as mentioned above.

Alternately, the zinc particle in a micronized form can also be directly procured to be used for the present invention.

It is preferred that the solubility of the zinc compound in water at 25°C is less than 0.001g/mL, more preferably less than 0.0005 g/mL. Most preferably the zinc compound is water insoluble.

The zinc compound may preferably be selected from zinc oxide, zinc carbonate and combination thereof. The most preferred zinc compound is zinc oxide. The amount of zinc compound preferably in the range of 0.5 to 4 %, more preferably 1 to 3%, and most preferably 1.5 to 2% by weight of the composition. The composition of the present invention also comprises two polysaccharides. The first polysaccharide comprising maltodextrin. In a most preferred aspect, the first polysaccharide is maltodextrin

Maltodextrin is a very well-known food additive. It is a flavourless substance. It is generally produced from vegetable starch by hydrolysis. The starch is preferably corn or wheat. It is generally known to improve the mouthfeel of savouries.

The amount of maltodextrin used in the composition of the present invention is in the range of 0.5 to 5%, more preferably 1 to 4%, furthermore preferably 2 to 4% and most preferably 2 to 3% by weight of the composition. The composition of the present invention also comprises a second polysaccharide.

The second polysaccharide is gum arabic. It is also commonly known as gum acacia. It is an edible water-soluble gum widely used in food industries as stabilizer and/or thickener.

The amount of gum arabic in the composition of the present invention is in the range of 0.05 to 6%, more preferably 0.1 to 4%, further preferably 0.1 to 3% and most preferably 0.5 to 2% by weight.

The composition of the present invention comprises a leaf tea product. A leaf tea product preferably means a tea product which is obtained after the tea manufacturing processes and comprise less than 10%, preferably less than 7% and most preferably less than 5% moisture by weight of the leaf tea product. The leaf tea product may preferably be selected from a black tea product, a green tea product, an oolong tea product, a white tea product or blends thereof. Black tea generally refers to fermented tea and produced by processing fresh tea leaves. Fresh tea leaf refers to tea leaf, buds and/or stem that have never been dried to a water content of less than 30% by weight, and usually have moisture content in the range 60 to 90%. Black tea has different characteristics to green tea. Black tea is more astringent in taste and less bitter than green tea. The redness of black tea liquor is also significantly higher than that of green tea. Black tea also contains higher level of theaflavins.

In the process of black tea, fermentation refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

Green tea refers to substantially unfermented tea. Green tea has different characteristics than black tea. Green tea liquor is light in colour unlike black tea. Green tea also enriched with catechins and low or no amount of theaflavins.

Oolong tea refers to semi-fermented tea.

The preferred leaf tea product for the purpose of the present invention is either black tea or green tea, the most preferred is black tea.

The amount of leaf tea product in the composition is preferably in the range of 85 to 98.5%, more preferably 87 to 98.5%, furthermore preferably 90 to 98.5% and most preferably 92 to 98.5% by weight of the composition.

The composition as per the present invention may comprise further nutrients. The further nutrients may be selected from vitamin C or any other suitable nutrients.

The present invention also provides a process of providing a zinc fortified tea composition comprising the steps of:
a) providing a zinc compound with solubility less than 0.001g/mL in water at 25°C;
b) micronizing the zinc compound to produce particle size in the range of 0.1 - 10 micron;
c) adding a first polysaccharide comprising maltodextrin and a second polysaccharide comprising gum arabic to the micronized zinc compound;
d) mixing the materials of step (c) to obtain a coating mixture; and,
e) coating a leaf tea product with the coating mixture obtained in step d.

The process starts with providing a zinc compound with solubility less than 0.001g/mL in water at 25°C. More preferably the solubility is less than 0.0005 g/mL. Most preferably the zinc compound is water insoluble. After that the zinc compound undergoes a step of micronization (size reduction). The particle size of the micronized zinc compounds is preferably in the range of 0.1 to 50 micron, more preferably in the range of 0.1 to 30 micron, further more preferably in the range of 0.1 to 20 micron and most preferably in the range of 0.1 to 10 micron.

Alternately zinc compound with the above-mentioned solubility and particle size can directly be used in the process of the present invention.

In the next step a first polysaccharide comprising maltodextrin and a second polysaccharide comprising gum arabic is added to the micronized zinc compound. Then these materials are properly mixed to obtain a coating mixture.

After that, this coating mixture is coated on a leaf tea product. The leaf tea product may preferably be selected from a black tea product, a green tea product, an oolong tea product, a white tea product or blends thereof.

Water is preferably added while preparing the coating solution as it helps in better mixing of the ingredients. Preferably, the temperature of the water is in the range of 25°C to 75°C, more preferably 30°C to 70°C, further more preferably 35°C to 65°C and most preferably 35°C to 55°C.

The present invention will now be demonstrated by way of non-limiting examples below. The examples are for illustration only and do not limit the scope of the invention in any manner.

### Examples:

### Preparation of different zinc fortified tea product

Different zinc fortified tea products were prepared using the processes as described below;

### Example A:

2.75g of zinc sulfate heptahydrate (solubility:57.7g/100g water at 25°C), 1g of gum acacia and 3g of Maltodextrin were dissolved in 43g of distilled water (at 50°C) to prepare a coating solution. 93.25g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80°C.

Then 1.6g of the dried tea as produced above is blended with 0.4g of regular back leaf tea (obtained from Kenya). The blend was then used to prepare tea infusion.

### Example 1:

2.5g of zinc oxide (solubility: 0.0004g/100g water at 25°C) was micronized using a mill (Analytical mill, model: IKA A11 basic). After milling the particle size reduced to 10micron (average size). 1g of Gum Acacia and 3g of Maltodextrin were dissolved in 43g of Distilled Water (at 50°C) to prepare binder solution. The micronized zinc oxide was added to the binder solution to prepare a coating solution. 93.5g of black leaf tea (obtained from Kenya) was taken in a bowl and the coating solution was sprinkled on the tea and mixed thoroughly in a Hobart blender. Then this mixture was spread on a ceramic plate and kept for drying in a hot air oven at 80°C.

The 1.9g of the dried tea produced above was then blended with 0.1g of regular back leaf tea (obtained from Kenya). The blend was then used to prepare tea infusion.

For the above examples zinc sulfate heptahydrate was obtained from Merck (Catalogue no.1088830500), Gum acacia was also obtained from Merck (Catalogue no. 1042281000), Maltodextrin was obtained from Sigma Aldrich (Catalogue no. 419699-100G) and Zinc Oxide was obtained from Merck (Catalogue no.1088490500).

After the above tea products were prepared, the infusions were produced from the tea products using the following protocol:
2g of tea product was taken in a mug and 200mL of boiling water was poured in it. After 2 minutes of brewing, the content was filtered using a strainer and the filtered tea was taken for further analysis.

The amount of zinc in the final tea beverages were measured using the following the regular ICP-OES procedure (Inductively coupled plasma - Optical Emission Spectrophotometer):
The tea infusions were acidified with concentrated nitric acid (~65%) and digested in a microwave digester (Make: Anton Paar, Model: Multiwave Go) for 60 minutes. The digested solution was then injected in ICP-OES (Agilent) and the emission spectral intensity was measured at the wavelength of 213.8nm. The intensity was then converted to concentration of zinc using a standard calibration curve.

The results are summarized below in Table 1.

**Table 1:**

| Example No | Amount of zinc coated (mg/2g of black leaf tea) | Amount of zinc delivered in the infusion (mg/2g of black leaf tea) | % Delivery |
|---|---|---|---|
| A | 2.55 | 0.98 | 38% |
| 1 | 1.99 | 1.69 | 85% |

From the above examples it is evident that Example 1 able to deliver much higher amount of zinc in the infusion whereas the delivery for Example A is much lower compared to Example 1. Further, amount of zinc used per 2g of black tea leaf is substantially less for Example 1, still it delivers substantially higher amount of zinc.

Therefore, from the description of the invention is it clear that by way of present invention it is now possible to provide a zinc fortified tea composition with substantial amount of zinc being delivered at each cup of beverages.

## Claims

1. A tea composition comprising;
a) a micronized zinc compound;
b) a first polysaccharide comprising maltodextrin;
c) a second polysaccharide comprising gum arabic; and,
d) a leaf tea product,
wherein:
- the particle size of the zinc compound is in the range of 0.1 to 50 micron; the amount of maltodextrin is in the range of 0.5 to 5% by weight of the composition; and
- the amount of gum arabic is in the range of 0.05 to 6% by weight.

2. A composition according to claim 1 wherein the particle size of the zinc compound is in the range of 0.1 to 20 micron.

3. A composition according to claim 1 wherein the particle size of the zinc compound is in the range of 0.1 to 10 micron.

4. A composition according to claim 1 wherein the solubility of the zinc compound in water at 25°C is less than 0.001g/mL.

5. The composition according to any one of the preceding claims 1 or 2 wherein the zinc compound is selected from zinc oxide, zinc carbonate and combination thereof.

6. The composition according to any one of the preceding claims wherein the zinc compound is zinc oxide.

7. The composition according to claim 1 wherein the amount of maltodextrin is in the range of 1 to 4% by weight of the composition.

8. The composition according to claim 1 wherein the amount of gum arabic is in the range of 0.1 to 4% by weight.

9. The composition according to claim 1 wherein the leaf tea product is selected from a black tea product, a green tea product, an oolong tea product, a white tea product or blends thereof.

10. The composition according to claim 8 wherein the leaf tea product is a black tea product.

11. The composition according to any one of the preceding claims wherein the amount of leaf tea product in the composition is in the range of 85 to 98.5% by weight of the composition.

12. The composition as claimed in any one of the preceding claims may comprise further nutrients.

13. A process of providing a zinc fortified tea composition comprising the steps of:
a) providing a zinc compound with solubility less than 0.001g/mL in water at 25°C;
b) micronizing the zinc compound to produce particle size in the range of 0.1 - 10 micron;
c) adding a first polysaccharide comprising maltodextrin and a second polysaccharide comprising gum arabic to the micronized zinc compound;
d) mixing the materials of step (c) to obtain a coating mixture; and,
e) coating a leaf tea product with the coating mixture obtained in step d.

14. A process according to claim 12 wherein water is added at step (d).

15. A process according to claim 13 wherein the temperature of the water is in the range of 25°C to 75°C.

## Patentansprüche

1. Tee-Zusammensetzung, die Folgendes umfasst:
a) eine mikronisierte Zinkverbindung;
b) ein erstes Polysaccharid, das Maltodextrin umfasst;
c) ein zweites Polysaccharid, das Gummi arabicum umfasst; und
d) ein Blatttee-Produkt,
wobei:
- die Teilchengröße der Zinkverbindung im Bereich von 0,1 bis 50 µm liegt;
die Menge des Maltodextrins im Bereich von 0,5 bis 5 Gew.-% der Zusammensetzung liegt; und
- die Menge an Gummi arabicum im Bereich von 0,05 bis 6 Gew.-% liegt.

2. Zusammensetzung nach Anspruch 1, wobei die Teilchengröße der Zinkverbindung im Bereich von 0,1 bis 20 µm liegt.

3. Zusammensetzung nach Anspruch 1, wobei die Teilchengröße der Zinkverbindung im Bereich von 0,1 bis 10 µm liegt.

4. Zusammensetzung nach Anspruch 1, wobei die Löslichkeit der Zinkverbindung in Wasser bei 25 °C geringer ist als 0,001 g/ml.

5. Zusammensetzung nach einem der vorangegangenen Ansprüche 1 oder 2, wobei die Zinkverbindung aus Zinkoxid, Zinkcarbonat und Kombinationen davon ausgewählt ist.

6. Zusammensetzung nach einem der vorangegangenen Ansprüche, wobei die Zinkverbindung Zinkoxid ist.

7. Zusammensetzung nach Anspruch 1, wobei die Menge an Maltodextrin im Bereich von 1 bis 4 Gew.-% der Zusammensetzung liegt.

8. Zusammensetzung nach Anspruch 1, wobei die Menge an Gummi arabicum im Bereich von 0,1 bis 4 Gew.-% der Zusammensetzung liegt.

9. Zusammensetzung nach Anspruch 1, wobei das Blatttee-Produkt aus einem Schwarztee-Produkt, einem Grüntee-Produkt, einem Oolongtee-Produkt, einem Weißtee-Produkt und Mischungen davon ausgewählt ist.

10. Zusammensetzung nach Anspruch 8, wobei das Blatttee-Produkt ein Schwarztee-Produkt ist.

11. Zusammensetzung nach einem der vorangegangenen Ansprüche, wobei die Menge des Blatttee-Produkts in der Zusammensetzung im Bereich von 85 bis 98,5 Gew.-% der Zusammensetzung liegt.

12. Zusammensetzung nach einem der vorangegangenen Ansprüche, die weitere Nährstoffe umfassen kann.

13. Verfahren zum Bereitstellen einer Zink-hältigen Tee-Zusammensetzung, das die folgenden Schritte umfasst:
a) das Bereitstellen einer Zinkverbindung mit einer Löslichkeit in Wasser bei 25 °C von weniger als 0,001 g/ml;
b) das Mikronisieren der Zinkverbindung, um eine Teilchengröße im Bereich von 0,1 bis 10 µm zu erhalten;
c) das Zusetzen eines ersten Polysaccharids, das Maltodextrin umfasst, und eines zweiten Polysaccharids, das Gummi arabicum umfasst, zu der mikronisierten Zinkverbindung;
d) das Vermischen der Materialien aus Schritt c), um ein Beschichtungsgemisch zu erhalten; und
e) das Beschichten eines Blatttee-Produkts mit dem in Schritt d) erhaltenen Beschichtungsgemisch.

14. Verfahren nach Anspruch 12, wobei in Schritt d) Wasser zugesetzt wird.

15. Verfahren nach Anspruch 13, wobei die Temperatur des Wassers im Bereich von 25 °C bis 75 °C liegt.

## Revendications

1. Composition de thé, comprenant :
a) un composé de zinc micronisé ;
b) un premier polysaccharide comprenant de la maltodextrine ;
c) un second polysaccharide comprenant de la gomme arabique ; et,
d) un produit de thé en feuilles,
dans laquelle :
- la taille de particule du composé de zinc est dans la plage de 0,1 à 50 microns ; la quantité de maltodextrine est dans la plage de 0,5 à 5 % en poids de la composition ; et
- la quantité de gomme arabique est dans la plage de 0,05 à 6 % en poids.

2. Composition selon la revendication 1, dans laquelle la taille de particule du composé de zinc est dans la plage de 0,1 à 20 microns.

3. Composition selon la revendication 1, dans laquelle la taille de particule du composé de zinc est dans la plage de 0,1 à 10 microns.

4. Composition selon la revendication 1, dans laquelle la solubilité du composé du zinc dans l'eau à 25°C est inférieure à 0,001 g/mL.

5. Composition selon l'une quelconque des revendications précédentes 1 ou 2, dans laquelle le composé de zinc est choisi parmi l'oxyde de zinc, le carbonate de zinc et une combinaison de ceux-ci.

6. Composition selon l'une quelconque des revendications précédentes, dans laquelle le composé de zinc est de l'oxyde de zinc.

7. Composition selon la revendication 1, dans laquelle la quantité de maltodextrine est dans la plage de 1 à 4 % en poids de la composition.

8. Composition selon la revendication 1, dans laquelle la quantité de gomme arabique est dans la plage de 0,1 à 4 % en poids.

9. Composition selon la revendication 1, dans laquelle le produit à base de thé en feuilles est choisi parmi un produit à base de thé noir, un produit à base de thé vert, un produit à base de thé oolong, un produit à base de thé blanc ou des mélanges de ceux-ci.

10. Composition selon la revendication 8, dans laquelle le produit de thé en feuilles est un produit de thé noir.

11. Composition selon l'une quelconque des revendications précédentes, dans laquelle la quantité de produit de thé en feuilles dans la composition est dans la plage de 85 à 98,5 % en poids de la composition.

12. Composition selon l'une quelconque des revendications précédentes, pouvant comprendre des nutriments supplémentaires.

13. Procédé de fourniture d'une composition de thé enrichie en zinc, comprenant les étapes consistant à :
a) fournir un composé de zinc avec une solubilité inférieure à 0,001 g/mL dans de l'eau à 25°C ;
b) microniser le composé de zinc pour produire une taille de particule dans la plage de 0,1 à 10 microns ;
c) ajouter un premier polysaccharide comprenant de la maltodextrine et un second polysaccharide comprenant de la gomme arabique au composé de zinc micronisé ;
d) mélanger les matériaux de l'étape (c) pour obtenir un mélange de revêtement ; et,
e) revêtir un produit de thé en feuilles avec le mélange de revêtement obtenu à l'étape d.

14. Procédé selon la revendication 12, dans lequel de l'eau est ajoutée à l'étape (d).

15. Procédé selon la revendication 13, dans lequel la température de l'eau est dans la plage de 25°C à 75°C.
